# EUROPEAN PATENT SPECIFICATION

(11) **EP 4 207 110 B1**
(45) Date of publication and mention of the grant of the patent: **31.12.2025**
(21) Application number: 23158184.4
(22) Date of filing: 11.01.2017
(51) Int. Cl.: G07C 5/00, G07C 5/08, G06F 13/42, B60W 40/09

(54) **A DEVICE AND METHOD FOR COLLECTING USER-BASED INSURANCE DATA IN VEHICLES**
VORRICHTUNG UND VERFAHREN ZUM SAMMELN BENUTZERBASIERTER VERSICHERUNGSDATEN IN FAHRZEUGEN
DISPOSITIF ET PROCÉDÉ DE COLLECTE DE DONNÉES D'ASSURANCE BASÉES SUR L'UTILISATEUR DANS DES VÉHICULES

(30) Priority: 11.01.2016 US 201614992805
(43) Date of publication of application: 05.07.2023
(62) Divisional of application: 17702201.9
(73) Proprietor: Malikie Innovations Limited, Dun Laoghaire, Dublin A96 VR66 (IE)
(72) Inventor: CHENNAKESHU, Sandeep, Waterloo, N2K 0A7 (CA)
(74) Representative: Murgitroyd & Company

(56) References cited:
- EP-A1- 2 495 703
- WO-A1-2008/001125
- US-A1- 2012 197 486
- US-A1- 2012 283 893
- US-A1- 2014 195 100
- US-A1- 2015 106 289

## Description

### FIELD

The specification relates generally to computing devices in vehicles, and specifically to a device, method and system for collecting user-based insurance data in vehicles.

### BACKGROUND

User-based vehicle insurance is becoming more common, where insurance companies base insurance rates on driving habits rather than on traditional rating methods. In such methods, telematics systems can collect data about operational use of the vehicle and send the data to a remote computing device. However, such systems may not reliably distinguish between multiple drivers of a single vehicle, may unreliably distinguish between different data sets for multiple drivers, and/or may have security and/or privacy concerns.
EP2495703A1 discloses an operation management device that works in conjunction with a portable information terminal having an operation management function. A cradle includes a holder formed with a concave shape for mounting a portable information terminal having the operation management function, a receiving casing for receiving electronic equipment parts, and an arm for coupling the holder and the receiving casing, and uses a display of the portable information terminal. The receiving casing includes a sensor section including a measuring instrument that is not included in the portable information terminal or a measuring instrument having a higher accuracy than the portable information terminal and a communication unit such as a data communication interface for transmitting a detection result from the sensor section as information for supplementation used for operation management to the portable information terminal by short-range radio communications.

### SUMMARY

Accordingly, there is provided a device, method, and non-volatile computer-readable medium as detailed in the claims that follow

### BRIEF DESCRIPTIONS OF THE DRAWINGS

For a better understanding of the various implementations described herein and to show more clearly how they may be carried into effect, reference will now be made, by way of example only, to the accompanying drawings in which:
Fig. 1 depicts a system for collecting user-based insurance data in vehicles, according to non-limiting implementations.
Fig. 2 depicts a schematic block diagram of the system of Fig. 1, according to non-limiting implementations.
Fig. 3 depicts a block diagram of a flowchart of a method for collecting user-based insurance data in vehicles, according to non-limiting implementations.
Fig. 4 depicts the system of Fig. 1, where log-in data is received, according to non-limiting implementations.
Fig. 5 depicts the system of Fig. 1, where driver identification data is received, according to non-limiting implementations.
Fig. 6 depicts the system of Fig. 1, where vehicle data is received, according to non-limiting implementations.
Fig. 7 depicts the system of Fig. 1, where vehicle data is encrypted according to non-limiting implementations.
Fig. 8 depicts the system of Fig. 1, where encrypted vehicle data is transmitted to a server, according to non-limiting implementations.
Fig. 9 depicts a block diagram of a flowchart of a method for securely remotely controlling devices in vehicles, according to non-limiting implementations.

### DETAILED DESCRIPTION

In general, this disclosure is directed to a device, method and system for collecting user-based insurance data in vehicles. In particular a device in a vehicle selects a current encryption key, from a plurality of driver-associated encryption keys, based on the current driver, and encrypts vehicle data from a vehicle diagnostic monitor using the current encryption key. The encryption keys can be provisioned at the device, for example when a new driver is detected and/or when a new driver signs into an input device. The encryption keys can be private keys respectively associated with each driver of the vehicle, such that the encrypted collected data is particularly associated with given drivers of the vehicle. Hence, when the encrypted collected data is transmitted to a remote server (e.g. associated with and/or operated by an insurance company), the driver associated with the encrypted collected data can be identified when an associated public key, associated with the driver, successfully decrypts the encrypted collected data. Furthermore, the device can be implemented as a dongle which can communicate with a second device, such as a mobile device, smartphone, and the like, located in the vehicle; for example, the dongle can be plugged into a vehicle diagnostic port, such as an on-board diagnostics (OBD) port or an OBD-II port of the vehicle. The dongle may collect and encrypt the vehicle data (such as fuel consumption, speed, braking, engine diagnostics, odometer, location (GPS), etc.), and transmit the encrypted collected data to the second device which can, in turn, transmit the encrypted collected data to a remote server and data base or Internet of Things (IoT) Platform. Alternatively, the dongle can communicate directly with the remote server. While certain such systems exist, they often suffer from one or more limitations. For example, the data may not be encrypted, or the driver may not be uniquely identified. Similarly, in such implementations, a cost of a dongle can be reduced by using a mobile device to communicate with the remote server, rather than include cell-phone circuits, and the like, in the dongle. Furthermore, transmitting the encrypted vehicle data using the mobile device can lead to better ease of use and/or deployment of such dongles; for example, as compared to dongles that have to be removed from a vehicle and interfaced with a computer and/or mailed to an insurance company.

In this specification, elements may be described as "configured to" perform one or more functions or "configured for" such functions.

It is understood that for the purpose of this specification, language of "at least one of X, Y, and Z" and "one or more of X, Y and Z" can be construed as X only, Y only, Z only, or any combination of two or more items X, Y, and Z (e.g., XYZ, XY, XZ, YZ, and the like). Similar logic can be applied for two or more items in any occurrence of "at least one ..." and "one or more..." language

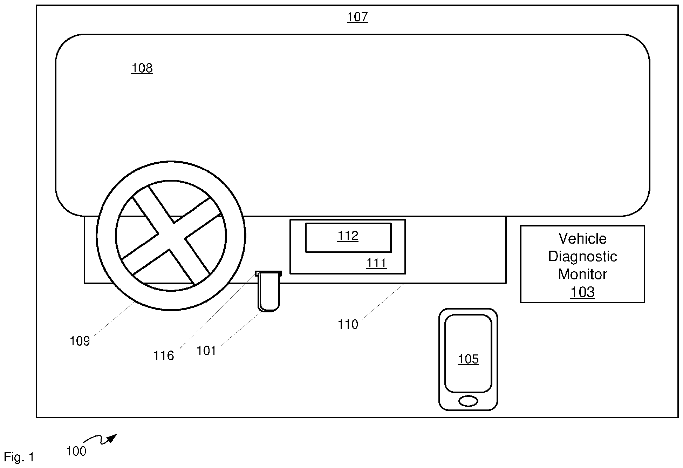

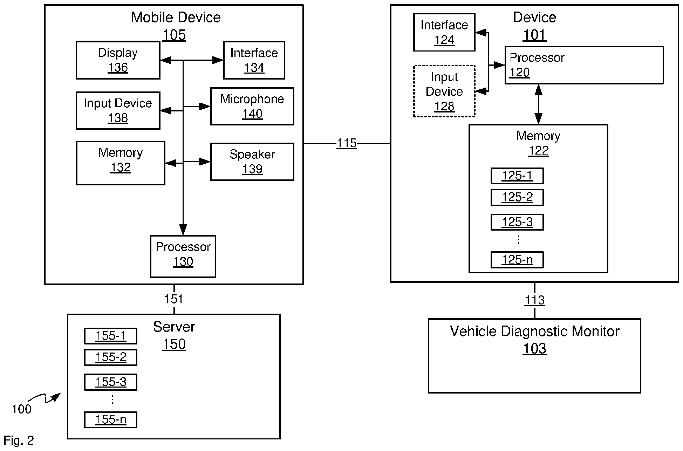

Attention is next directed to Fig. 1 and Fig. 2 which respectively depict a schematic perspective view, and a block diagram, of a system 100 for collecting user-based insurance data in vehicles. System 100 comprises: a device 101 which interfaces with a vehicle diagnostic monitor 103, and a remote server 150 (as depicted in Fig. 2). While in some implementations device 101 can communicate directly with remote server 150, in other implementations device 101 can communicate with remote server 150 via a mobile device 105. In particular, Fig. 1 depicts a schematic interior view of a passenger area of a vehicle 107. Devices 101, 105 and vehicle diagnostic monitor 103 are located in vehicle 107, which includes a windshield 108, a steering wheel 109, and a dashboard 110, dashboard 110 optionally comprising an infotainment and/or entertainment system 111 (referred to hereafter as infotainment system 111) that can include a display 112 and an input device (not depicted), which can include a touchscreen of display 112. While vehicle diagnostic monitor 103 is depicted in Fig. 1, vehicle diagnostic monitor 103 can generally be hidden from view from the passenger area of vehicle 107. As depicted, device 101 comprises a removable dongle that is connected to a communication bus 113 of vehicle 107 (as depicted in Fig. 2), device 101 in communication with vehicle diagnostic monitor 103 via communication bus 113. Device 101 is further in communication with mobile device 105 via a link 115. However, in other implementations, device 101 can be in communication with server 150 via a wireless network, without intervening mobile device 105. Alternatively, system 100 can comprise an Internet of Things (IoT) platform (e.g. a platform that can collect, process and store data) configured to communicate with both device 101 and server 150, and/or server 150 can comprise an IoT platform.

In particular, as depicted, device 101 is removabley connected to communication bus 113 via a port 116. Port 116 may comprise a connector, such as an OBD-II connector. Additionally or alternatively, port 116 may include one or more of an OBD (on-board diagnostics) connector, an Ethernet bus connector, and a CAN (controller area network) Bus connector. In one implementation, device 101 is removabley connected to communication bus 113 via an OBD-II connector. In another implementation device 101 may be removabley connected to communication bus 113 via a USB (universal serial bus) connector, for example at a USB port at infotainment unit 111, and/or another USB port, assuming that vehicle 107 comprises a communication interface between the USB port and/or infotainment unit 111, and communication bus 113. In other words, device 101 can be removabley connected to any port that has access to a communication bus where vehicle data can be collected from a vehicle diagnostics monitor.

With reference to Fig. 2, device 101 further comprises a processor 120, a memory 122 and communication interface 124. In some implementations, device 101 further comprises an input device 128, depicted in stippled lines in Fig. 2 to indicate that such an input device 128 is optional; while input device 128 is not depicted in the dongle implementation depicted in Fig. 1, such a dongle can be adapted to include input device 128. Memory 122 stores a plurality of driver-associated encryption keys 125-1, 125-2, 125-3...125-n, which are interchangeably referred to hereafter, collectively, as keys 125 and, generically, as a key 125. Communication interface 124 is configured to communicate with vehicle diagnostic monitor 103 and mobile device 105. Processor 120 is configured to: determine a current driver of vehicle 107; select a current encryption key from plurality of the driver-associated encryption keys 125 based on the current driver; collect, using communication interface 124, vehicle data from vehicle diagnostic monitor 103; encrypt the vehicle data using the current encryption key to produce encrypted vehicle data; and, transmit, using communication interface 124, the encrypted vehicle data to remote server 150. As depicted, device 101 is configured to transmit, using communication interface 124, the encrypted vehicle data to remote server 150 via mobile device 105; however in other implementations interface 124 can include radios and the like communicate with remote server 150 without an intervening device; in these implementations encrypted vehicle data can be communicated to remote server 150 via wireless link between device 101 and remote server 150.

While details of vehicle diagnostic monitor 103 are not depicted, vehicle diagnostic monitor 103 comprises components of vehicle 107 which track and/or measure parameters associated with operation of vehicle 107 including, but not limited to, speed, acceleration, braking, distance travelled, fuel consumption, deployment of airbags and the like. In other words, vehicle diagnostic monitor 103 comprises hardware configured to track and/or measure parameters of vehicle 107 which can be used to rate a driver for insurance and/or determine when a driver is speeding, how the driver accelerates, how often the driver brakes, where a driver travels, time of day or night a driver is on the road, where a driver leaves the vehicle for an extended period of time (such as parking) and the like.

Optional mobile device 105 comprises a processor 130, a memory 132, a communication interface 134, a display device 136, an input device 138, and optionally a speaker 139 and a microphone 140. While not depicted, mobile device 105 further comprises a power source, including but not limited to a battery and/or a power pack, or any other suitable power source, a housing and the like. Indeed, mobile device 105 can be any type of electronic device that can be used in a self-contained manner. Mobile device 105 includes, but is not limited to, any suitable combination of electronic devices, communications devices, mobile devices, laptop computers, portable electronic devices, mobile computing devices, portable computing devices, tablet computing devices, laptop computing devices, PDAs (personal digital assistants), cellphones, smartphones, e-readers, and the like. Other suitable devices are within the scope of present implementations. In general, however, mobile device 105 is configured to communicate with both device 101 and a remote server 150, for example a server of an insurance company, and the like, via links 115, 151.

Furthermore, while only one optional mobile device 105 is depicted in system 100, system 100 can comprise a plurality of optional mobile devices similar to mobile device 105, each configured to communicate with device 101 and server 150, for example upon execution of a user-based insurance application and the like. Each of mobile devices, including mobile device 105, upon execution of the user-based insurance application, can be configured to act as a go-between and/or an intermediate device between device 101 and server 150. Hence, communication between device 101 and server 150 occurs without the use of a vehicle-based telematics system.

Server 150 generally comprises one or more servers configured to manage at least a portion of a user based insurance system, including, but not limited to, managing keys of a user-based insurance system and/or further configured to communicate with one or more mobile devices, including mobile device 105, via a network that includes link 151. Server 150 can be based on any well-known server environment including a module that houses one or more central processing units, volatile memory (e.g. random access memory), persistent memory (e.g. hard disk devices) and network interfaces to allow server 150 to communicate over link 151. However, it is to be emphasized that a vast array of other types of computing environments for server 150 are contemplated. For example, server 150 can comprise a computing device, including but not limited to one or more of a personal computer, a laptop computer, and a mobile computing device. Furthermore, while processor(s) and memory(s) of server 150 are not depicted, they are appreciated to be nonetheless present. Server 150 can further comprise an Internet of Things (IoT) platform; alternatively, system 100 can comprise an IoT platform configured to communicate with both device 101 and server 150.

Server 150 stores, in a memory, a plurality of driver-associated decryption keys 155-1, 155-2, 155-3...155-n which are interchangeably referred to hereafter, collectively, as keys 155 and, generically, as a key 155. For example, each key 155 can correspond to a key 125 stored at device 101 and hence can be used to decrypt data encrypted with a corresponding key 125.

In general, each pair of keys 125, 155 can comprise, respectively, a public key and a corresponding private key. In some implementations, each key 125 can comprise an ECC (elliptical curve cryptography) public key, and each key 155 can comprise a corresponding ECC private key. However, other types of encryption/decryption keys are within the scope of present implementations including, but not limited to, asymmetric keys and symmetric keys.

While an integer number of "n" pairs of keys 125, 155 are depicted, a number of each of keys 125, 155 can correspond to a number of drivers of vehicle 107 and/or a number of drivers of vehicle 107 that are registered for user-based insurance.

It is also assumed that keys 125, 155 have been previously stored at each of device 101 and server 150 using one or more provisioning processes. For example, keys 125, 155 can be stored at each of device 101 and server 150 at a factory and assigned to drivers of vehicle 107 by an insurance company, and the like, operating server 150; in these implementations, when a driver registers for user-based insurance, server 150, and the like, can transmit a key assignment command to device 101 via mobile device 105, and processor 120 is configured to assign a given key 125 to a given driver by storing driver identification data received with the key assignment command in association with a given key 125 identified in the key assignment command.

Alternatively, when a new driver of vehicle 107 registers with the insurance company for user-based insurance, a new pair of keys 125, 155 can be generated, for example by server 150, and new key 125 can be transmitted to device 101, by server 150 transmitting new key 125 to mobile device 105, which in turn transmits the new key 125 to device 101 when devices 101, 105 are next in communication; the new key 125 can also be stored with driver identification data received with the new key 125.

Alternatively, a new driver can log-in to system 100 at mobile device 105 and/or at infotainment unit 111 (e.g. using display device 112 and/or an input device) using driver identification data (e.g. credentials) previously provided to the new driver from an insurance company, for example using email, messages, posted mail, and the like; the driver identification data are then uniquely associated with a private key 125, which can be used to encrypt to vehicle data for the driver. The private key 125 can be provisioned at device 101 as described above.

Furthermore, keys 125 can be stored in a secure data base at memory 122 and received at device 101 using a key exchange mechanism (including, but not limited to, ECC based Diffie Hellman exchange) between device 101 and server 150.

In other words, while not depicted, each key pair 125, 155 can be stored, at device 101 and server 150 respectively, in conjunction with an associated driver identifier, including, but not limited to, an insurance policy number, an alphanumeric identifier, a log-in identifier and the like.

Furthermore, provisioning of device 101 can include provisioning device 101 with a certificate (e.g. a certificate associated with remote server 150 and/or a remote server certificate). Such provisioning can occur at a factory and/or by an entity provisioning and shipping device 101 for installation at vehicle 107, such as an insurance company. When device 101 is first installed and/or received at port 116, and communications are established with remote server 150 and/or an IoT platform, device 101 can register itself with remote server 150 (and/or the IoT platform). Device 101 and remote server 150 (and/or the IoT platform) can authenticate each other in such a registration process using a suitable protocol which can include, but is not limited to, TLS (transport layer security), and the like. Upon authentication with remote server 150 (and/or IoT platform), device 101 can be officially activated, in that server 150 will recognize communications from device 101 as being from an authenticated device.

The registration process and/or authentication process can include, but is not limited to, device 101 communicating a VIN ("vehicle identification number") of vehicle 107 to remote server 150; the VIN can be provisioned at device 101 using input device 128 and/or an input device at infotainment unit and/or at the factory and/or by the entity shipping device 101, which can be the same entity insuring vehicle 107. Alternatively, device 101 can be configured to automatically retrieve the VIN from a memory (not depicted) of vehicle 107 that stores associated vehicle data. In this manner, device 101 can be associated with vehicle 107 as uniquely identified by the VIN. Furthermore, when a user registers with system 100, and has a key 125 assigned to the user, remote server 150 (and/or the IoT platform) can recognize that a user is associated with vehicle 107, as well as that device 101 is being used with vehicle 107, and further recognize when the user is driving vehicle 107.

However, device 101 can be reused with a new vehicle by erasing keys 125, the VIN and other vehicle-associated data, and repeating the provisioning using data associated with the new vehicle. However, in this case one would need to reinstall a new set of keys 125 in the device. That is, when the device is installed it may authenticate with the server and the server may authenticate with the device to establish that both know each other and are valid/authorized entities and then proceed to communicate. The server may then exchange the public key with the device while it stores the corresponding private key.

Link 115 generally comprises any suitable link that enables device 101 and mobile device 105 to communicate. Link 115 can hence include any suitable combination of wired and/or wireless links, wired and/or wireless devices and/or wired and/or wireless networks, including but not limited to any suitable combination of USB (universal serial bus) cables, serial cables, wireless links, cell-phone links, cellular network links (including but not limited to 2G, 2.5G, 3G, 4G+, and the like) wireless data, Bluetooth^{™} links, Zigbee^{™} links, NFC (near field communication) links, WiFi links, WiMax links, packet based links, the Internet, analog networks, the PSTN (public switched telephone network), access points, and the like, and/or a combination. However, in particular non-limiting implementations, link 115 comprises a local link, for example a BTLE (Bluetooth^{™} low energy link) and the like.

Similarly, link 151 generally comprises any suitable link that enables mobile device 105 and server 150 to communicate. Link 151 can hence include any suitable combination of wired and/or wireless links, wired and/or wireless devices and/or wired and/or wireless networks, including but not limited to any suitable combination of wireless links, cell-phone links, cellular network links (including but not limited to 2G, 2.5G, 3G, 4G+, and the like) , WiFi links, WiMax links, packet based links, the Internet, analog networks, the PSTN (public switched telephone network), access points, and the like, and/or a combination. However, in particular non-limiting implementations, link 151 comprises a cellular data link, and the like, such that mobile device 105 and server 150 can communicate while vehicle 107 is moving.

Links 115, 151 can optionally be replaced with a link between device 101 and server 150, such a link being similar to link 151.

Communication bus 113 comprises any suitable communication bus used in a vehicle, including, but not limited to, communication buses using one or more of the following protocols: Byteflight, CAN (Controller Area Network), D2B (Domestic Digital Bus), FlexRay, DC-BUS, IDB-1394, IEBus, I²C, ISO 9141-1, ISO9141-2, J1708, J1587, J1850, J1939, ISO 11783, J1939, ISO 11783, Keyword Protocol 2000 (KWP2000), LIN (Local Interconnect Network), MOST (Media Oriented Systems Transport), Multifunction Vehicle Bus, SMARTwireX, SPI (Serial Peripheral Interface), Ethernet, Ethernet AVB and the like. In some implementations, communication bus 113 can include an OBD-II port and/or an OBD port and/or a USB port and the like.

It should be emphasized, however, that the structure of devices 101, 105 and server 150 are purely examples and other implementations of each are within the scope of present implementations.

For example, in Fig. 1, device 101 is depicted as a dongle configured to removabley connect to communication bus 113 of vehicle 107, to connect communication interface 124 to vehicle diagnostic monitor 103. Hence, vehicle 107 can be retrofitted for user-based insurance by plugging the dongle into port 116, which can include, but is not limited to, an OBD-II port connected to communication bus 113.

While not depicted, infotainment system 111 comprises components that can provide entertainment and/or information to a driver of vehicle 107, including, but not limited to, AM/FM radios, satellite radios, CD players, GPS/navigation devices, MP3 players, and the like, with display 112 and/or an input device generally configured to receive input data and communicate with device 101. For example, display 112 and/or an associated input device, such as a touchscreen, a key pad and the like, can be used to receive input data that can be communicated to device 101.

However, in other implementations, device 101 can be implemented as component of vehicle 107 and/or infotainment system 111, in communication with vehicle diagnostic monitor 103 via communication bus 113.

In general, data from vehicle diagnostic monitor 103 can be received at processor 120 (which can be implemented as a plurality of processors, including but not limited to one or more central processors (CPUs)). Processor 120 can further comprise one or more hardware processors and/or an ASIC (application-specific integrated circuit) processor. Processor 120 is configured to communicate with a memory 122 which can comprise a non-volatile storage unit (e.g. Erasable Electronic Programmable Read Only Memory ("EEPROM"), Static RAM, Flash Memory, Atomic RAM, Resistive RAM, Phase Change Memory) and/or a volatile storage unit (e.g. dynamic random access memory ("RAM")). In particular non-limiting implementations, memory 122 comprises a special storage configured for storing leys 125 that can include, but is not limited to fuses, a one-time programmable ("OTP") or fuses and the like. In particular, encryption keys described herein are stored in a non-volatile portion of memory 122; indeed, encryption keys described herein are generally not stored in a volatile memory. Further, memory described herein used to hold keys may be chosen as to be secure and tamper-proof.

Programming instructions that implement the functional teachings of device 101 as described herein can be maintained, persistently, in memory 122 and used by processor 120, which makes appropriate utilization of volatile storage during the execution of such programming instructions. Those skilled in the art will now recognize that memory 122 is an example of a computer-readable medium, and in particular a non-transitory computer-readable medium, storing a computer program, wherein execution of the computer program is for configuring the processor 120 as described herein. Furthermore, memory 122 is also an example of a memory unit and/or memory module.

In general, when processor 120 processes such instructions stored at memory 122, processor 120 is configured to: determine a current driver of vehicle 107; select a current encryption key from plurality of the driver-associated encryption keys 125 based on the current driver; collect, using communication interface 124, vehicle data from vehicle diagnostic monitor 103; encrypt the vehicle data using the current encryption key to produce encrypted vehicle data; and, transmit, using communication interface 124, the encrypted vehicle data to server 150.

Interface 124, is implemented as one or more radios and/or connectors and/or network adaptors, configured to wirelessly communicate with mobile device 105 and/or remote server, and vehicle diagnostic monitor 103, for example via link 115 and communication bus 113. It will be appreciated that, in these implementations, interface 124 can be configured to correspond with network architecture that is used to implement one or more communication links to the one or more communication networks and/or devices, including but not limited to any suitable combination of USB (universal serial bus) cables, serial cables, wireless links, Bluetooth links, NFC (near field communication) links, packet based links, analog networks, access points, and the like, and/or a combination. When device 101 is configured to communicate with remote server 150, and/or an IoT platform, without the use of mobile device 105, 124 can be configured to correspond with network architecture that is used to implement one or more communication links to remote server 150, and/or an IoT platform, including but not limited to any suitable combination of any suitable combination of wired and/or wireless links, wired and/or wireless devices and/or wired and/or wireless networks, including but not limited to any suitable combination of USB (universal serial bus) cables, serial cables, wireless links, Bluetooth^{™} links, Zigbee^{™} links, NFC (near field communication) links, WiFi links, other packet based links, and the like.

As depicted, interface 124 is generally enabled to communicate with device 105 via link 115, and with vehicle diagnostic monitor 103 via communication bus 113. Hence, interface 124 can comprises one or more of: an OBD-II (on-board diagnostics) connector, an OBD (on-board diagnostics) connector, a USB (universal serial bus) connector, or other connector configured to communicate with vehicle diagnostic monitor 103 via communication bus 113.

Furthermore, in some implementations, interface 124 can be configured to communicate with infotainment unit 111, for example via communication bus 113; such communication can be used for enrolment of users, assignment of a key 125 to a user, logging into device 101, and the like.

Optional input device 128 can generally be enabled to receive input data, and can comprise any suitable combination of input devices, including but not limited to a keyboard, a keypad, a pointing device, a mouse, a track wheel, a trackball, a touchpad, a touch screen and the like. Other input devices are within the scope of present implementations.

While not depicted, device 101 can further comprise a power source, including but not limited to a battery and/or a power pack, and/or a connection to a power supply of vehicle 107, or any other suitable power source, as well as a housing and the like.

**In** any event, it should be understood that a wide variety of configurations for device 101 are contemplated.

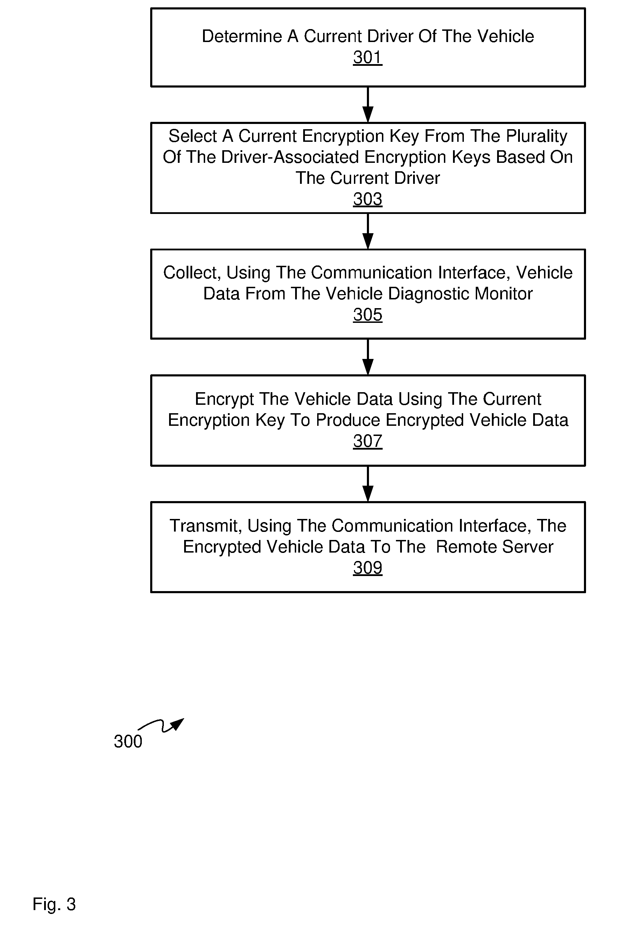

Attention is now directed to Figure 3 which depicts a block diagram of a flowchart of a method 300 for collecting user-based insurance data in vehicles, according to the invention. In order to assist in the explanation of method 300, it will be assumed that method 300 is performed using device 101, and specifically by processor 120 and when processor 120 processes instructions stored at memory 122. Indeed, method 300 is one way in which device 101 can be configured. Furthermore, the following discussion of method 300 will lead to a further understanding of device 101, system 100, and its various components.

Regardless, it is to be emphasized, that method 300 need not be performed in the exact sequence as shown, unless otherwise indicated; and likewise various blocks may be performed in parallel rather than in sequence; hence the elements of method 300 are referred to herein as "blocks" rather than "steps". It is also to be understood, however, that method 300 can be implemented on variations of device 101 as well.

At block 301, processor 120 determines a current driver of vehicle 107.

At block 303, processor 120 selects a current encryption key from a plurality of the driver-associated encryption keys 125 based on the current driver.

At block 305, processor 120 collects, using communication interface 124, vehicle data from vehicle diagnostic monitor 103.

At block 307, processor 120 encrypts the vehicle data using the current encryption key to produce encrypted vehicle data.

At block 309, processor 120 transmits, using communication interface 124, the encrypted vehicle data to remote server 150.

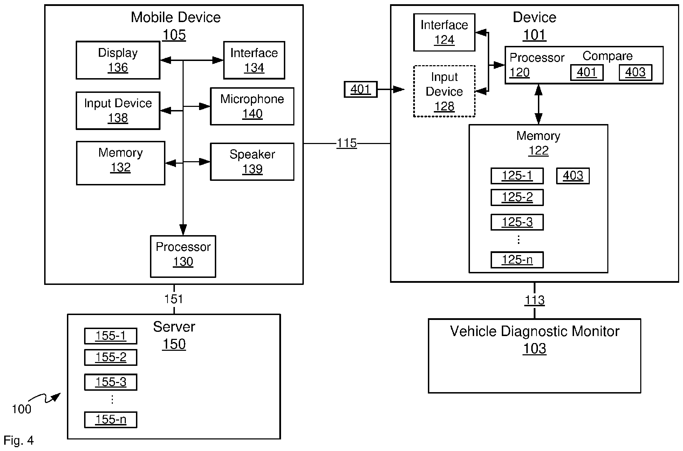

Method 300 will now be discussed with reference to Figs. 4 to 9, each of which are substantially similar to Fig. 2, with like elements having like numbers.

Attention is next directed to Fig. 4 which depicts a non-limiting implementation of block 301, in which processor 120 is further configured to determine the current driver of the vehicle by receiving log-in data 401 from input device of device 101. For example, as depicted, a log-in identifier 403 is stored in association with key 125-1 and identifies a driver associated with key 125-1; while only one log-in identifier 403 is depicted in Fig. 4, it is assumed that each key 125 is stored in association with a respective log-in identifier. Log-in identifier 403 can be provisioned at device 101, as described above in conjunction with provisioning of keys 125. A current driver can be determined at processor 120 by receiving log-in data 401 and comparing log-in data 401 with the log-in identifiers stored at memory 122, including log-in identifier 403. A current encryption key 125 can then be selected by processor 120 at block 303 based on a log-in identifier 403 that matches log-in data 401. As depicted, assuming that log-in identifier 403 matches log-in data 401, processor 120 selects key 125-1 as the current encryption key at block 303.

Alternatively, an input device of vehicle 107 located, for example, at dashboard 110 and/or at infotainment system 111 and/or at display 112 (e.g. a touchscreen), can be used to receive log-in data 401, which can be relayed to device 101 via communication bus 113, and a current encryption key 125 can then be selected by processor 120 at block 303 based on a log-in identifier 403 that matches log-in data 401 received at the input device of vehicle 107.

Furthermore, to address privacy issues, the driver can be prompted, e.g., at mobile device 105 and/or at infotainment unit 111, whether or not they want their data to be tracked. When a "Yes" option is selected, then data is tracked. When a "No" option is selected, then data is not tracked, however this can result in the driver not receiving insurance deductions, for example when insufficient data is tracked they. Thresholds for determining when insurance deductions are received can be set by an insurance company in at remote server 150 and/or at an IoT platform. Moreover, in certain circumstances, the selection of "Yes" or "No" can itself be a data point that is tracked, as can the insertion and/or removal of the device 101.

To further address privacy issues, in some implementations, data at device 101 can be associated with fine-grained permissions, in that different types of data collected by device 101 can be tagged with different permission levels in memory 122. Such permission levels can be set, for example, by the owner of the vehicle, the owner of the insurance policy, the insurance company, and/or the owner of the data. In some implementations, a user, such as a driver, via an application at mobile device 105, can select who can access what data. For example, the driver can elect to have their parents access the data and the insurance company access the data, or only the insurance company. Additionally, a parent can elect to access a child's data, but opt not to share the child's information with the insurance company. When a permission level is received, a tag is stored to a record of data that is transmitted. Remote server 150 (and/or the IoT platform) can then associate the tag with who can access the data.

In any event, in these implementations, when a driver enters the vehicle, the driver can log-in to device 101 via input device 128 and/or an input device of vehicle 107, and device 101 can select a key 125 accordingly. It is assumed that log-in identifier 403 is unique for each driver of vehicle 107 and/or unique to each associated key 125.

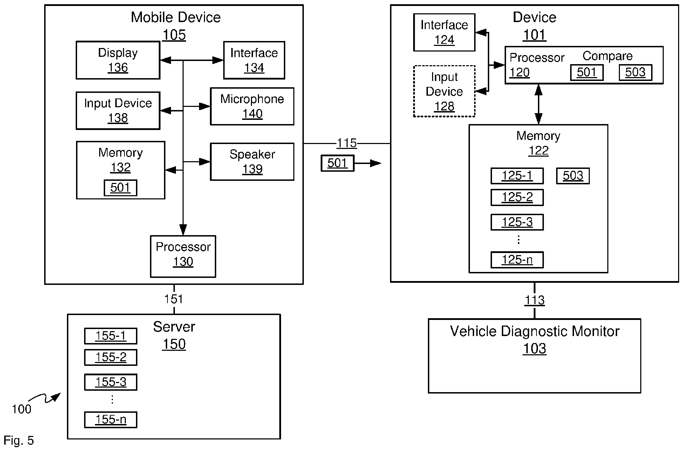

However, other processes for determining a current driver at block 301 are within the scope of present implementations. For example, attention is next directed to Fig. 5 which depicts device 101 receiving driver identification data 501, which can be similar to or different from log-in data 401, from mobile device 105. For example, as depicted in Fig. 5, in these implementations, memory 132 at mobile device 105 can store driver identification data 501 and transmit driver identification data 501 to device 101 when mobile device 105 is in communication with device 101. Driver identification data 501 can be provisioned at mobile device 105 when a user-insurance application is installed at mobile device 105, for example using data that identifies a user of mobile device 105, whom is assumed to also be the driver and/or in conjunction with provisioning keys 125 at device 101 using mobile device 105, as described above. Similar driver identification data 503 is stored in association with key 125-1 and identifies a driver associated with key 125-1; while only one set of driver identification data 503 is depicted in Fig. 5, it is assumed that each key 125 is stored in association with respective driver identification data. Driver identification data 503 can be provisioned at device 101 in conjunction with provisioning keys 125 at device 101 using mobile device 105, as described above.

Hence, when a driver enters a vehicle with mobile device 105, mobile device 105 can automatically transmit driver identification data 501 to device 101. A current driver can be determined at processor 120 by receiving driver identification data 501 and comparing driver identification data 501 with driver identification data stored at memory 122, including driver identification data 503. A current encryption key 125 can then be selected by processor 120 at block 303 based on a driver identification data 503 that matches driver identification data 501. As depicted, assuming that driver identification data 503 matches driver identification data 501, and processor 120 selects key 125-1 as the current encryption key at block 303.

However, in some situations, two registered drivers of vehicle 107 can be present in vehicle 107, for example, one as a current driver and the other as a passenger; in these situations, each of the drivers can have a mobile device, each of which can transmit respective driver identification data to device 101. Hence, to determine which is the current driver, log-in data 401 can also be received at processor 120 as described above. Alternatively, processor 120 can cause display 112 of vehicle 107 and/or display 136 of mobile device 105 (and/or of the second mobile device), using communication bus 113 and/or link 115 and the like, to render a request confirmation of a current driver. Respective input can be received at vehicle 107 and/or at mobile device 105 (and/or at the second mobile device) confirming which of the drivers is the current driver. In yet further implementations, device 101 can comprise a display, and such a request for confirmation of a current driver can be rendered at the display of device 101. At this stage, permission to track data for the current driver can also be requested.

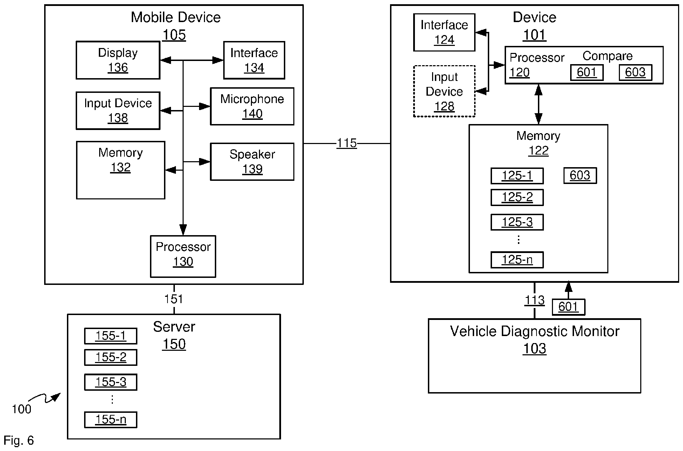

In yet further implementations, as depicted in Fig. 6, processor 120 can be further configured to determine the current driver of vehicle 107 by comparing vehicle data 601 received from vehicle diagnostic monitor 103 with stored vehicle data 603 associated with the current driver and/or a given key 125. For example, a driver's habits in operating a vehicle can act as a type of unique signature, for example similar to hand writing, speech patterns and the like; such patterns can be collected and/or determined and stored at memory 122 as stored vehicle data 603. When a current driver operates vehicle 107, vehicle data 601 can be collected and compared to stored vehicle data 603 to determine a current driver. Stored vehicle data 603 can comprise processed vehicle data comprising patterns and/or raw vehicle data.

For example, as depicted, stored vehicle data 603 is stored in association with key 125-1 and identifies a driver associated with key 125-1; while only one set of stored vehicle data 603 is depicted in Fig. 6, it is assumed that each key 125 is stored in association with stored vehicle data. A current encryption key 125 can then be selected by processor 120 at block 303 based on stored vehicle data 603 matching vehicle data 601. As depicted, assuming that stored vehicle data 603 matches vehicle data 601, processor 120 selects key 125-1 as the current encryption key at block 303. Such matching can comprise matching patterns in each of stored vehicle data 603 and vehicle data 601; such pattern matching need not be exact but can be within percentages of threshold values.

In some implementations processes for determining a current driver as described with reference to Figs. 4, 5 and 6 can be combined. For example, log-in data 401 and/or driver identification data 501 can be used to determine a current driver, vehicle data can be collected and stored as stored vehicle data 603 in association with a key 125 that is in turn stored in association with log-in data 401 and/or driver identification data 501; a next time the same driver operates vehicle 107, stored vehicle data 603 can be used to identify the driver and select a current encryption key.

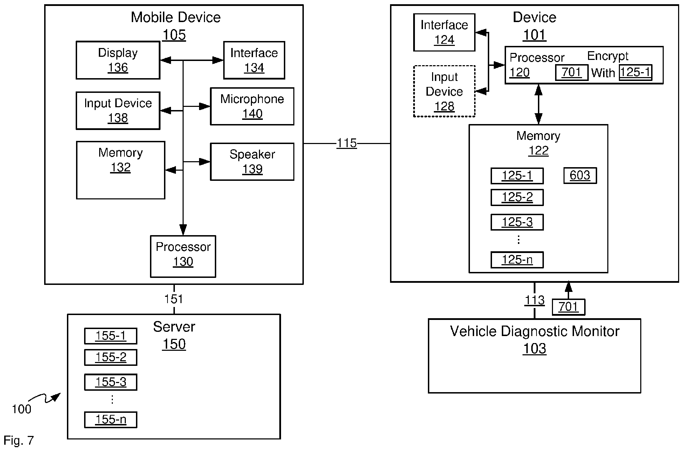

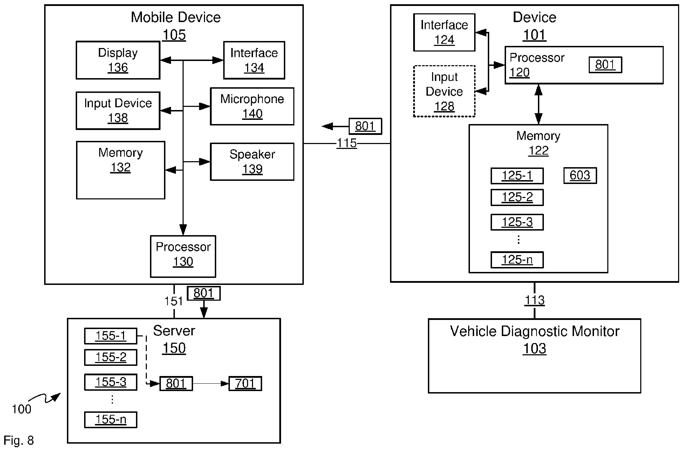

Attention is next directed to Figs. 7 and 8, which depict an implementation of blocks 305, 307, 309. With reference to Fig. 7, at block 305, processor 120 collects vehicle data 701 from vehicle diagnostic monitor 103, and encrypts vehicle data 701, at block 307, using the key selected at block 303, for example key 125-1. As depicted in Fig. 8 encryption of vehicle data 701 produces encrypted vehicle data 801, which is transmitted to remote server 150, for example via mobile device 105 (e.g. via interface 124 and link 115), at block 309. In particular, vehicle data 701 can include, but is not limited to, when the vehicle was started, when the vehicle was stopped and/or turned off, speed of the vehicle, acceleration of the vehicle, braking of the vehicle, distance travelled by the vehicle, fuel consumption of the vehicle, idle time of the vehicle, deployment of airbags at the vehicle, location of the vehicle, and the like. In other words, vehicle diagnostic monitor 103 tracks and/or measures parameters of vehicle 107 which can be used to rate a driver for insurance and/or determine when a driver is speeding, how the driver accelerates, how often the driver brakes, and the like, and transmit such data to device 101 as vehicle data 701. In some of these implementations, vehicle data 701 can be time-stamped and/or each event recorded in vehicle data 701 can be time-stamped.

Mobile device 105 then transmits encrypted vehicle data 801 to server 150 using link 151.

Alternatively, at block 309, device 101 can transmit encrypted vehicle data 801 to server 150 using a link there between without using mobile device 105.

Regardless, server 150 can receive encrypted vehicle data 801 and use keys 155 to attempt to decrypt encrypted vehicle data 801; when successful decryption occurs producing vehicle data 701, for example using a given key 155-1, server 150 can store and/or process vehicle data 701 to produce a user-based insurance rating for the associated driver.

In some implementations vehicle data 701 can be encrypted at block 307 with an identifier of a current driver, for example, log-in identifier 403 and/or driver identification data 503, which can also be stored at server 150. Hence, when server 150 decrypts vehicle data 701, an identifier of a current driver can be determined. Similarly, encrypted vehicle data 801 can be transmitted with an unencrypted identifier of a current driver and the unencrypted identifier of a current driver can be used by server 150 to determine which key 155 to use to decrypt encrypted vehicle data 801. Indeed, in some implementations, encrypted vehicle data 801 can include the encrypted identifier of a current driver and can also be transmitted with the unencrypted identifier of a current driver such that when encrypted vehicle data 801 is decrypted, the two identifiers can be compared as a verification and/or as an integrity check. In yet a more complicated embodiment the driver identifier and vehicle data can be hashed and signed by the key 125 and the signed hash together with the unsigned data can be sent to the server 150. The server decrypts the signed hash using the corresponding private key 155, then hashes the unsigned data using a similar hash algorithm and compares the two hashes. If they correspond there is an integrity check.

Furthermore, vehicle data 701 can be encrypted to produce encrypted vehicle data 801 periodically and/or when vehicle 107 is shut down after block 301 occurs. In other words, blocks 305, 307 and 309 can be repeated periodically or can occur one time per each use of vehicle 107, a use of vehicle 107 comprising execution of blocks 301 to block 303, which can occur when vehicle 107 is turned on and/or started, to when vehicle 107 is turned off and/or shut down. Alternatively, blocks 305 to 307 can occur periodically and/or be repeated throughout a use of vehicle 107, and again at the end of a use of vehicle 107. In some implementations, vehicle 107 can include a system for detecting catastrophic occurrences at vehicle 107, for example deployment of airbags, crashes, and the like, and blocks 305 to 307 can also occur when such a catastrophic occurrence is detected; in these implementations, vehicle data 701 and encrypted vehicle data 801 can include an indication of such catastrophic occurrence such that an insurance company, and the like, can be informed of such immediately, and alternatively inform emergency services of such. In some implementations vehicle diagnostic monitor 103 can comprise a system for detecting catastrophic occurrences at vehicle 107.

In yet further implementations, mobile device 105 and/or device 101 can be configured to monitor whether mobile device 105 has been used during operation of the vehicle, for example to make cellular telephone calls and/or to access the internet and/or whether a keyboard at mobile device 105 has been accessed during operation of the vehicle and/or to whether an input device (e.g. input device 138) has been accessed during operation of the vehicle. Such data can be incorporated into encrypted data 801 and /or transmitted to server 150 with encrypted vehicle data 801. In some of these implementations, device 101 can be configured to collect usage data from mobile device 105 and combine such usage data with vehicle data 701 prior to encryption, such that encrypted vehicle data 801 further comprises mobile device user data. Hence, in these implementations, processor 120 is further configured to combine vehicle data 701 with mobile device user data received from device 105 prior to encrypting vehicle data 701 at block 307 of method 300, such that encrypted vehicle data 801 includes encrypted mobile usage data.

Alternatively, mobile device 105 can be configured to: receive encrypted vehicle data 801 from device 101; and transmit encrypted vehicle data 801 to server 150 with mobile device user data. The mobile device user data can be time-stamped, as can vehicle data 701 (which can include start and stop times of usage of the vehicle), so that the two can be coordinated by server 150.

Persons skilled in the art will appreciate that there are yet more alternative implementations and modifications possible. For example, in some implementations, device 101 can be configured to be in a read-only mode with respect to data being requested by mobile device 105, server 150, and the like. For example, in these implementations while requests for data can be received on link 115, and data can be transmitted on link 115, but data cannot be received on link 115 and stored at memory 122. Hence, in such implementations, device 101 is prevented from being an attack vector for attempted hacking attempts on the vehicle. In particular, in some implementations, processor 120 can be further configured to place device 101 in a read-only mode when communication interface 124 is connected to vehicle diagnostic monitor 103.

Furthermore, device 101 can have at least two modes of communicating. For example, device 101 can communicate with remote server 150 (and/or IoT platform) directly when device 101 includes a cellphone modem, and device 101 can communicate with mobile device 105 when device 101 includes a USB and/or Bluetooth link (or other data connection) to mobile device 105. Other data connections to remote server 150 are also within the scope of present implementations. For example, device 101 can be configured to communicate with an in-vehicle telematics connection (including, but not limited to an OnStar^{™} or E-Call system and the like). In some implementations, an insurance company can pay the data usage bill associated with collecting the vehicle data. In other implementations, systems can be used that track personal data usage vs. other types of data usage, including, but not limited to systems developed by Movirtu^{™}. Such systems can separate data traffic between personal usage and that used for the insurance company (e.g. professional use). For example, mobile device 105 can be configured with such an application such that when device 101 transmits data via mobile device 150, this data can be recognized by mobile device 150, using a tag, a token, a parameter and the like, and then transmitted to a server in a network that allows tracking the data for personal and professional use. This can enable an insurance company to reimburse the driver for the data used to communicate the encrypted vehicle data, and other data for operating system 100.

Furthermore, device 101 can be further configured to reduce the risk of hacking. For example, a concern with insurance devices, such as device 101, is that they can be hacked: for example, a hacker could access to device 101 via mobile device 105 by hacking into the mobile device 105, and then gain control of vehicle 107 as when device 101 is connected to an OBD-II port, and hence a CAN bus, for example. To reduce such risk, in some implementations, when device 101 and remote server 150 (and/or IoT platform) authenticate each other they can establish a second key pair. This second key pair can comprise: a private key that can be used/stored by remote server 150; and an associated public key stored at device 101. Every incoming command from remote server 150 can be encrypted with the private key, by remote server 150, and device 101 can decrypt the commands using the public key. As it is unlikely that a hacker can use the same private key as remote server 150, such a scheme can prevent random commands from infecting device 101 and hence compromising vehicle 107. These keys can be regularly updated on a random schedule to ensure there is less chance to compromise them.

A further protection scheme could be implemented as follows:
1. At remote server 150, encrypt a command (and/or message and the like) with the server private key.
2. At remote server 150, generate a hash of the command and sign it with the device public key.
3. At remote server 150, transmit both the encrypted command and the hash to device 101.
4. At device 101, decrypt the encrypted command with a corresponding server public key.
5. At device 101, unlocks the hash with a device private key.
6. At device 101, process the decrypted command through a hash algorithm (i.e. the same algorithm used to generate the hash at remote server 150) and compare the resulting hash with the unlocked hash to verify the command.

For a hacker to gain access to the system, the hacker would have to know the private keys of remote server 150 and device 101 and all the algorithms used, which reduced the chances of a hacker breaking in to system 100. Furthermore, as device 101 can be shipped with a remote server certificate, it can be difficult for a hacker to replicate the remote server certificate.

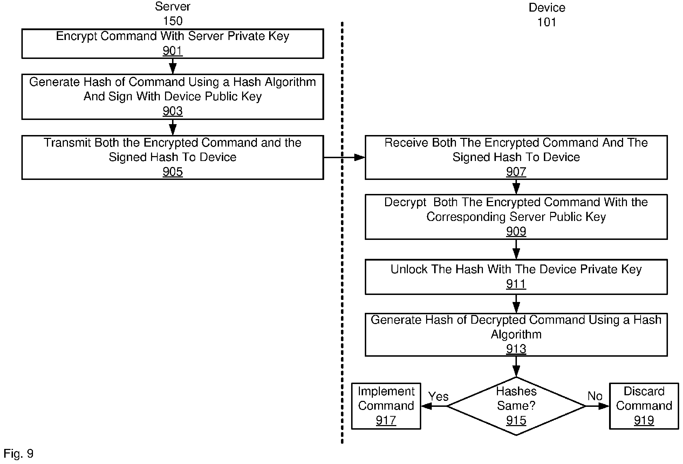

Indeed, attention is now directed to Figure 9 which depicts a block diagram of a flowchart of a method 900 for securely remotely controlling devices in vehicles, according to non-limiting implementations. In order to assist in the explanation of method 900, it will be assumed that method 900 is performed using system 100 and specifically device 101, and server 150. Indeed, method 900 is one way in which system 100 can be configured. Furthermore, the following discussion of method 900 will lead to a further understanding of system 100, device 101, and server 150. However, it is to be understood that system 100, device 101, and server 150 and/or method 900 can be varied, and need not work exactly as discussed herein in conjunction with each other, and that such variations are within the scope of present implementations.

Regardless, it is to be emphasized, that method 900 need not be performed in the exact sequence as shown, unless otherwise indicated; and likewise various blocks may be performed in parallel rather than in sequence; hence the elements of method 900 are referred to herein as "blocks" rather than "steps". It is also to be understood, however, that method 900 can be implemented on variations of device 101 as well.

It is further appreciated that a portion of method 900 occurs at server 150 and a portion of method 900 occurs at device 101, with portions separated by a stippled line.

Furthermore, it is assumed in method 300 that server 150 and device 101 have exchanged their respective public keys and/or their respective public keys have been issued to each for example by a key issuing authority (which can also be server 150); hence, server 150 has received and/or stored (and/or generated) a device public key associated with device 101, and device 101 has received and/or stored a server public key associated with server 150. Furthermore, it is assumed that server 150 has received and/or stored (and/or generated) a server private key complementary to the server public key, and device 101 has received and/or stored a device private key complementary to the device public key. It is further assumed that each of device 101 and server 150 are configured to produce hashes using a same hash algorithm which has been previously provisioned at each of device 101 and server 150,

At block 901, server 150 encrypts a command (and/or message and the like) with the server private key.

At block 903, server 150 generates a hash of the command using the hash algorithm and signs it with the device public key.

At block 905, server 150 transmits both the encrypted command and the hash signed with the device public key to device 101.

At block 907, device 101 receives both the encrypted command and the hash signed with the device public key.

At block 909, device 101 decrypts the encrypted command with the corresponding server public key.

At block 911, device 101 unlocks the hash with a device private key.

At block 913, device 101 generates a hash of the decrypted command using the hash algorithm (i.e. the same algorithm used to generate the hash at remote server 150 at block 903).

At block 915, device 101 compares the hash of the decrypted command with the hash received by server 150 to determine if they are the same.

When the hashes are the same (a "Yes" decision at block 915"), at block 917 device 101 implements the decrypted command (e.g. the decrypted command is verified).

When the hashes are not the same (a "No" decision at block 915"), at block 919 device 101 discards the decrypted command (e.g. the decrypted command is not verified). Alternatively, device 101 can take remedial action at block 919, provide a warning at an output device, such as display 126, that an external device is attempting to hack device 101, and/or transmit a record of the transaction with server 150 to a trusted security authority (whose address has been provisioned at device 101, for example at memory 132).

Those skilled in the art will appreciate that in some implementations, the functionality of device 101, mobile device 105, and server 150 can be implemented using pre-programmed hardware or firmware elements (e.g., application specific integrated circuits (ASICs), electrically erasable programmable read-only memories (EEPROMs), etc.), or other related components. In other implementations, the functionality of device 101, mobile device 105, and server 150 can be achieved using a computing apparatus that has access to a code memory (not depicted) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive, flash memory, and the like). Furthermore, the computer-readable program can be stored as a computer program product comprising a computer usable medium. Further, a persistent storage device can comprise the computer readable program code. The computer-readable program code and/or computer usable medium can comprise a non-transitory computer-readable program code and/or non-transitory computer usable medium. Alternatively, the computer-readable program code could be stored remotely but transmittable to these components via a modem, network interface card, or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

Persons skilled in the art will appreciate that there are yet more alternative implementations and modifications possible, and that the above examples are only illustrations of one or more implementations. The scope, therefore, is only to be limited by the claims appended hereto.

## Claims

1. A device (101) comprising:
a processor (120);
a memory (122) storing (i) a plurality of driver-associated encryption keys (125), and (ii) for each of the plurality of driver-associated encryption keys (125), a corresponding driver identifier (403); the plurality of driver identifiers corresponding to respective drivers of a vehicle (107); and
a communication interface (124) configured to communicate with a vehicle diagnostic monitor of the vehicle and to wirelessly communicate with a remote server (150),
the processor (120) configured to:
wirelessly receive, using the communication interface (124), a key assignment command from the remote server (150), the key assignment command identifying an encryption key (125) and comprising a driver identifier;
store the received driver identifier in association with the assigned encryption key (125) in the memory;
determine (301) a current driver of the vehicle (107) by receiving data (401;501;601) that identifies the current driver;
select (303), as a current encryption key (125), one of the plurality of the driver-associated encryption keys (125) that corresponds to one of the driver identifiers (403) matching the data (401;501;601) that identifies the current driver;
collect (305), using the communication interface, vehicle data from the vehicle diagnostic monitor;
encrypt (307) the vehicle data using the current encryption key to produce encrypted vehicle data; and
transmit (309), using the communication interface, the encrypted vehicle data to the remote server.

2. The device (101) of claim 1, wherein the data that identifies the current driver are log-in data (401) received from an input device (128) of the device (101).

3. The device (101) of claim 1 or 2, wherein the data that identifies the current driver are driver identification data (501) received, via the communication interface (124), from a mobile device (105).

4. The device (101) of any one of the claims 1 to 3, wherein the data that identifies the current driver are vehicle data (601) received from a vehicle diagnostic monitor (103).

5. The device (101) of any one of the claims 1 to 4, further comprising a removable dongle configured to removably connect to a communication bus.

6. The device (101) of any one of the claims 1 to 5, wherein the communication interface (124) comprises one or more of: an OBD, on-board diagnostics, connector, an OBD-II connector, a USB, universal serial bus, connector, an Ethernet bus connector, and a CAN, controller area network, Bus connector;
optionally wherein each of the driver-associated encryption keys (125) comprises a respective private encryption key.

7. The device (101) of any one of the claims 1 to 6, wherein the processor (120) is further configured to combine the vehicle data with user data prior to encrypting the vehicle data;
optionally wherein the processor (120) is further configured to place the device (101) in a read-only mode when the communication interface (124) is connected to the vehicle diagnostic monitor.

8. A method comprising:
at a device (101) comprising: a processor (120), a memory (122) storing (i) a plurality of driver-associated encryption keys (125), and (ii) for each of the plurality of driver-associated encryption keys (125), a corresponding driver identifier (403); the plurality of driver identifiers corresponding to respective drivers of a vehicle; and a communication interface (124) configured to communicate with a vehicle diagnostic monitor of the vehicle and to wirelessly communicate with a remote server,
wirelessly receiving, using the communication interface (124), a key assignment command from the remote server (150), the key assignment command identifying an encryption key (125) and comprising a driver identifier;
storing the received driver identifier in association with the assigned encryption key (125) in the memory;
determining (301), at the processor (120), a current driver of the vehicle (107) by receiving data (401;501;601) that identifies the current driver;
selecting (303), at the processor (120), as a current encryption key (125), one of the plurality of the driver-associated encryption keys (125) that corresponds to one of the driver identifiers (403) matching the data (401;501;601) that identifies the current driver;
collecting (305), at the processor (120), using the communication interface (124), vehicle data from the vehicle diagnostic monitor (103);
encrypting (307), at the processor (120), the vehicle data using the current encryption key (125) to produce encrypted vehicle data; and
transmitting (309), at the processor (120), using the communication interface (124), the encrypted vehicle data to the remote server (150).

9. The method of claim 8, wherein the data that identifies the current driver are log-in data (401) received from an input device (128) of the device (101).

10. The method of claim 8 or 9, wherein the data that identifies the current driver are driver identification data (501) received, via the communication interface (124), from a mobile device (105).

11. The method of any one of the claims 8 to 10, wherein the data that identifies the current driver are vehicle data (601) received from a vehicle diagnostic monitor (103).

12. The method of any one of the claims 8 to 11, wherein the communication interface (124) comprises one or more of: an OBD, on-board diagnostics, connector, an OBD-II, on-board diagnostics, connector, a USB, universal serial bus, connector, an Ethernet bus connector, and a CAN, controller area network, Bus connector.

13. The method of any one of claims 8 to 12,wherein each of the driver-associated encryption keys (125) comprises a respective private encryption key.

14. The method of any one of claims 8 to 13, further comprising combining the vehicle data with user data received from a mobile device prior to encrypting the vehicle data
optionally further comprising placing the device (101) in a read-only mode when the communication interface (124) is connected to the vehicle diagnostic monitor.

15. A non-volatile computer-readable medium storing a computer program, wherein execution of the computer program on the processor (120) of a device (101) according to any one of claims 1 to 7 causes the device (101) to perform the method of any one of claims 8 to 14.

## Patentansprüche

1. Eine Vorrichtung (101), beinhaltend:
einen Prozessor (120);
einen Speicher (122), der (i) eine Vielzahl von mit einem Fahrer assoziierten Verschlüsselungsschlüsseln (125) und (ii) für jeden der Vielzahl von mit einem Fahrer assoziierten Verschlüsselungsschlüsseln (125) eine entsprechende Fahrerkennung (403) speichert; wobei die Vielzahl von Fahrerkennungen jeweiligen Fahrern eines Fahrzeugs (107) entsprechen; und
eine Kommunikationsschnittstelle (124), die konfiguriert ist, um mit einer Fahrzeugdiagnoseüberwachungseinrichtung des Fahrzeugs zu kommunizieren und drahtlos mit einem entfernten Server (150) zu kommunizieren,
wobei der Prozessor (120) für Folgendes konfiguriert ist:
drahtloses Empfangen, unter Verwendung der Kommunikationsschnittstelle (124), eines Schlüsselzuweisungsbefehls von dem entfernten Server (150), wobei der Schlüsselzuweisungsbefehl einen Verschlüsselungsschlüssel (125) identifiziert und eine Fahrerkennung beinhaltet;
Speichern der empfangenen Fahrerkennung in Assoziation mit dem zugewiesenen Verschlüsselungsschlüssel (125) in dem Speicher;
Bestimmen (301) eines aktuellen Fahrers des Fahrzeugs (107) durch das Empfangen von Daten (401; 501; 601), die den aktuellen Fahrer identifizieren; Auswählen (303), als einen aktuellen Verschlüsselungsschlüssel (125), eines der Vielzahl der mit einem Fahrer assoziierten Verschlüsselungsschlüssel (125), der einer der Fahrerkennungen (403) entspricht, die mit den Daten (401; 501; 601), die den aktuellen Fahrer identifizieren, übereinstimmt;
Sammeln (305), unter Verwendung der Kommunikationsschnittstelle, von Fahrzeugdaten von der Fahrzeugdiagnoseüberwachungseinrichtung;
Verschlüsseln (307) der Fahrzeugdaten unter Verwendung des aktuellen Verschlüsselungsschlüssels, um verschlüsselte Fahrzeugdaten zu produzieren; und
Übertragen (309), unter Verwendung der Kommunikationsschnittstelle, der verschlüsselten Fahrzeugdaten an den entfernten Server.

2. Vorrichtung (101) gemäß Anspruch 1, wobei die Daten, die den aktuellen Fahrer identifizieren, Log-in-Daten (401) sind, die von einer Eingabevorrichtung (128) der Vorrichtung (101) empfangen werden.

3. Vorrichtung (101) gemäß Anspruch 1 oder 2, wobei die Daten, die den aktuellen Fahrer identifizieren, Fahreridentifikationsdaten (501) sind, die über die Kommunikationsschnittstelle (124) von einer Mobilvorrichtung (105) empfangen werden.

4. Vorrichtung (101) gemäß einem der Ansprüche 1 bis 3, wobei die Daten, die den aktuellen Fahrer identifizieren, Fahrzeugdaten (601) sind, die von einer Fahrzeugdiagnoseüberwachungseinrichtung (103) empfangen werden.

5. Vorrichtung (101) gemäß einem der Ansprüche 1 bis 4, ferner beinhaltend einen entfernbaren Dongle, der konfiguriert ist, um entfernbar mit einem Kommunikationsbus verbunden zu werden.

6. Vorrichtung (101) gemäß einem der Ansprüche 1 bis 5, wobei die Kommunikationsschnittstelle (124) einen oder mehrere von Folgenden beinhaltet:
einem On-Board-Diagnoseverbinder, OBD-Verbinder, einem OBD-II-Verbinder, einem Universal-Serial-Bus-Verbinder, USB-Verbinder, einem Ethernet-Bus-Verbinder und einem Controller-Area-Network-Bus-Verbinder, CAN-Bus-Verbinder;
wobei optional jeder der mit einem Fahrer assoziierten Verschlüsselungsschlüssel (125) einen jeweiligen privaten Verschlüsselungsschlüssel beinhaltet.

7. Vorrichtung (101) gemäß einem der Ansprüche 1 bis 6, wobei der Prozessor (120) ferner konfiguriert ist, um vor dem Verschlüsseln der Fahrzeugdaten die Fahrzeugdaten mit Benutzerdaten zu kombinieren;
wobei optional der Prozessor (120) ferner konfiguriert ist, um die Vorrichtung (101) in einen Nur-Lese-Modus zu versetzen, wenn die Kommunikationsschnittstelle (124) mit der Fahrzeugdiagnoseüberwachungseinrichtung verbunden ist.

8. Ein Verfahren, beinhaltend:
an einer Vorrichtung (101), die Folgendes beinhaltet: einen Prozessor (120), einen Speicher (122), der (i) eine Vielzahl von mit einem Fahrer assoziierten Verschlüsselungsschlüsseln (125) und (ii) für jeden der Vielzahl von mit einem Fahrer assoziierten Verschlüsselungsschlüsseln (125) eine entsprechende Fahrerkennung (403) speichert; wobei die Vielzahl von Fahrerkennungen jeweiligen Fahrern eines Fahrzeugs entsprechen; und eine Kommunikationsschnittstelle (124), die konfiguriert ist, um mit einer Fahrzeugdiagnoseüberwachungseinrichtung des Fahrzeugs zu kommunizieren und mit einem entfernten Server drahtlos zu kommunizieren, drahtloses Empfangen, unter Verwendung der Kommunikationsschnittstelle (124), eines Schlüsselzuweisungsbefehls von dem entfernten Server (150), wobei der Schlüsselzuweisungsbefehl einen Verschlüsselungsschlüssel (125) identifiziert und eine Fahrerkennung beinhaltet;
Speichern der empfangenen Fahrerkennung in Assoziation mit dem zugewiesenen Verschlüsselungsschlüssel (125) in dem Speicher;
Bestimmen (301), an dem Prozessor (120), eines aktuellen Fahrers des Fahrzeugs (107) durch das Empfangen von Daten (401; 501; 601), die den aktuellen Fahrer identifizieren;
Auswählen (303), an dem Prozessor (120), als einen aktuellen Verschlüsselungsschlüssel (125), eines der Vielzahl der mit einem Fahrer assoziierten Verschlüsselungsschlüssel (125), der einer der Fahrerkennungen (403) entspricht, die mit den Daten (401;501;601), die den aktuellen Fahrer identifizieren, übereinstimmt;
Sammeln (305), an dem Prozessor (120), unter Verwendung der Kommunikationsschnittstelle (124), von Fahrzeugdaten von der Fahrzeugdiagnoseüberwachungseinrichtung (103);
Verschlüsseln (307), an dem Prozessor (120), der Fahrzeugdaten unter Verwendung des aktuellen Verschlüsselungsschlüssels (125), um verschlüsselte Fahrzeugdaten zu produzieren; und
Übertragen (309), an dem Prozessor (120), unter Verwendung der Kommunikationsschnittstelle (124), der verschlüsselten Fahrzeugdaten an den entfernten Server (150).

9. Verfahren gemäß Anspruch 8, wobei die Daten, die den aktuellen Fahrer identifizieren, Log-in-Daten (401) sind, die von einer Eingabevorrichtung (128) der Vorrichtung (101) empfangen werden.

10. Verfahren gemäß Anspruch 8 oder 9, wobei die Daten, die den aktuellen Fahrer identifizieren, Fahreridentifikationsdaten (501) sind, die über die Kommunikationsschnittstelle (124) von einer Mobilvorrichtung (105) empfangen werden.

11. Verfahren gemäß einem der Ansprüche 8 bis 10, wobei die Daten, die den aktuellen Fahrer identifizieren, Fahrzeugdaten (601) sind, die von einer Fahrzeugdiagnoseüberwachungseinrichtung (103) empfangen werden.

12. Verfahren gemäß einem der Ansprüche 8 bis 11, wobei die Kommunikationsschnittstelle (124) einen oder mehrere von Folgenden beinhaltet:
einem On-Board-Diagnoseverbinder, OBD-Verbinder, einem On-Board-Diagnoseverbinder, OBD-II-Verbinder, einem Universal-Serial-Bus-Verbinder, USB-Verbinder, einem Ethernet-Bus-Verbinder und einem Controller-Area-Network-Bus-Verbinder, CAN-Bus-Verbinder.

13. Verfahren gemäß einem der Ansprüche 8 bis 12, wobei jeder der mit einem Fahrer assoziierten Verschlüsselungsschlüssel (125) einen jeweiligen privaten Verschlüsselungsschlüssel beinhaltet.

14. Verfahren gemäß einem der Ansprüche 8 bis 13, ferner beinhaltend das Kombinieren der Fahrzeugdaten mit Benutzerdaten, die von einer Mobilvorrichtung empfangen werden, vor dem Verschlüsseln der Fahrzeugdaten,
optional ferner beinhaltend das Versetzen der Vorrichtung (101) in einen Nur-Lese-Modus, wenn die Kommunikationsschnittstelle (124) mit der Fahrzeugdiagnoseüberwachungseinrichtung verbunden ist.

15. Ein nichtflüchtiges computerlesbares Medium, das ein Computerprogramm speichert, wobei die Ausführung des Computerprogramms auf dem Prozessor (120) einer Vorrichtung (101) gemäß einem der Ansprüche 1 bis 7 die Vorrichtung (101) dazu veranlasst, das Verfahren gemäß einem der Ansprüche 8 bis 14 durchzuführen.

## Revendications

1. Un dispositif (101) comprenant :
un processeur (120) ;
une mémoire (122) stockant (i) une pluralité de clés de chiffrement associées au conducteur (125), et (ii) pour chacune de la pluralité de clés de chiffrement associées au conducteur (125), un identifiant de conducteur (403) correspondant ; la pluralité d'identifiants de conducteur correspondant à des conducteurs respectifs d'un véhicule (107) ; et
une interface de communication (124) configurée pour communiquer avec un moniteur de diagnostic de véhicule du véhicule et pour communiquer par voie non filaire avec un serveur distant (150),
le processeur (120) étant configuré pour :
recevoir par voie non filaire, à l'aide de l'interface de communication (124), une commande d'attribution de clé provenant du serveur distant (150), la commande d'attribution de clé identifiant une clé de chiffrement (125) et comprenant un identifiant de conducteur ;
stocker l'identifiant de conducteur reçu en association avec la clé de chiffrement (125) attribuée dans la mémoire ;
déterminer (301) un conducteur actuel du véhicule (107) en recevant des données (401 ; 501 ; 601) qui identifient le conducteur actuel ;
sélectionner (303), en tant que clé de chiffrement (125) actuelle, une clé de chiffrement parmi la pluralité des clés de chiffrement associées au conducteur (125) qui correspond à l'un des identifiants de conducteur (403) concordant avec les données (401 ; 501 ; 601) qui identifient le conducteur actuel ;
collecter (305), à l'aide de l'interface de communication, des données de véhicule provenant du moniteur de diagnostic de véhicule ;
chiffrer (307) les données de véhicule à l'aide de la clé de chiffrement actuelle pour produire des données de véhicule chiffrées ; et
transmettre (309), à l'aide de l'interface de communication, les données de véhicule chiffrées au serveur distant.

2. Le dispositif (101) de la revendication 1, dans lequel les données qui identifient le conducteur actuel sont des données de connexion (401) reçues en provenance d'un dispositif d'entrée (128) du dispositif (101).

3. Le dispositif (101) de la revendication 1 ou de la revendication 2, dans lequel les données qui identifient le conducteur actuel sont des données d'identification de conducteur (501) reçues, via l'interface de communication (124), en provenance d'un dispositif mobile (105).

4. Le dispositif (101) de l'une quelconque des revendications 1 à 3, dans lequel les données qui identifient le conducteur actuel sont des données de véhicule (601) reçues en provenance d'un moniteur de diagnostic de véhicule (103).

5. Le dispositif (101) de l'une quelconque des revendications 1 à 4, comprenant en outre un dongle amovible configuré pour se connecter de manière amovible à un bus de communication.

6. Le dispositif (101) de l'une quelconque des revendications 1 à 5, dans lequel l'interface de communication (124) comprend un ou plusieurs éléments parmi : un connecteur OBD (*on-board diagnostics,* diagnostic embarqué), un connecteur OBD-II, un connecteur USB (*universal serial bus,* bus en série universel), un connecteur bus Ethernet, et un connecteur bus CAN (*controller area network,* réseau CAN) ; facultativement dans lequel chacune des clés de chiffrement associées au conducteur (125) comprend une clé de chiffrement privée respective.

7. Le dispositif (101) de l'une quelconque des revendications 1 à 6, dans lequel le processeur (120) est en outre configuré pour combiner les données de véhicule avec des données d'utilisateur avant de chiffrer les données de véhicule ;
facultativement dans lequel le processeur (120) est en outre configuré pour placer le dispositif (101) dans un mode en lecture seule lorsque l'interface de communication (124) est connectée au moniteur de diagnostic de véhicule.

8. Un procédé comprenant :
au niveau d'un dispositif (101) comprenant : un processeur (120), une mémoire (122) stockant (i) une pluralité de clés de chiffrement associées au conducteur (125), et (ii) pour chacune de la pluralité de clés de chiffrement associées au conducteur (125), un identifiant de conducteur (403) correspondant ; la pluralité d'identifiants de conducteur correspondant à des conducteurs respectifs d'un véhicule ; et une interface de communication (124) configurée pour communiquer avec un moniteur de diagnostic de véhicule du véhicule et pour communiquer par voie non filaire avec un serveur distant, la réception par voie non filaire, à l'aide de l'interface de communication (124), d'une commande d'attribution de clé provenant du serveur distant (150), la commande d'attribution de clé identifiant une clé de chiffrement (125) et comprenant un identifiant de conducteur ;
le stockage de l'identifiant de conducteur reçu en association avec la clé de chiffrement (125) attribuée dans la mémoire ;
la détermination (301), au niveau du processeur (120), d'un conducteur actuel du véhicule (107) en recevant des données (401 ; 501 ; 601) qui identifient le conducteur actuel ;
la sélection (303), au niveau du processeur (120), en tant que clé de chiffrement (125) actuelle, d'une clé de chiffrement parmi la pluralité des clés de chiffrement associées au conducteur (125) qui correspond à l'un des identifiants de conducteur (403) concordant avec les données (401 ; 501 ; 601) qui identifient le conducteur actuel ;
la collecte (305), au niveau du processeur (120), à l'aide de l'interface de communication (124), de données de véhicule provenant du moniteur de diagnostic de véhicule (103) ;
le chiffrement (307), au niveau du processeur (120), des données de véhicule à l'aide de la clé de chiffrement (125) actuelle pour produire des données de véhicule chiffrées ; et
la transmission (309), au niveau du processeur (120), à l'aide de l'interface de communication (124), des données de véhicule chiffrées au serveur distant (150).

9. Le procédé de la revendication 8, dans lequel les données qui identifient le conducteur actuel sont des données de connexion (401) reçues en provenance d'un dispositif d'entrée (128) du dispositif (101).

10. Le procédé de la revendication 8 ou de la revendication 9, dans lequel les données qui identifient le conducteur actuel sont des données d'identification de conducteur (501) reçues, via l'interface de communication (124), en provenance d'un dispositif mobile (105).

11. Le procédé de l'une quelconque des revendications 8 à 10, dans lequel les données qui identifient le conducteur actuel sont des données de véhicule (601) reçues en provenance d'un moniteur de diagnostic de véhicule (103).

12. Le procédé de l'une quelconque des revendications 8 à 11, dans lequel l'interface de communication (124) comprend un ou plusieurs éléments parmi : un connecteur OBD (*on-board diagnostics*), un connecteur *OBD*(*on-board diagnostics*)-II*,* un connecteur USB (*universal serial bus*), un connecteur bus Ethernet, et un connecteur bus CAN (réseau CAN).

13. Le procédé de l'une quelconque des revendications 8 à 12, dans lequel chacune des clés de chiffrement associées au conducteur (125) comprend une clé de chiffrement privée respective.

14. Le procédé de l'une quelconque des revendications 8 à 13, comprenant en outre la combinaison des données de véhicule avec des données d'utilisateur reçues en provenance d'un dispositif mobile avant de chiffrer les données de véhicule facultativement comprenant en outre le placement du dispositif (101) dans un mode en lecture seule lorsque l'interface de communication (124) est connectée au moniteur de diagnostic de véhicule.

15. Un support lisible par ordinateur non volatil stockant un programme informatique, dans lequel l'exécution du programme informatique sur le processeur (120) d'un dispositif (101) selon l'une quelconque des revendications 1 à 7 amène le dispositif (101) à effectuer le procédé de l'une quelconque des revendications 8 à 14.
